# EUROPEAN PATENT APPLICATION

(11) **EP 4 579 986 A1**
(43) Date of publication of application: **02.07.2025**
(21) Application number: 23866684.6
(22) Date of filing: 22.11.2023
(51) Int. Cl.: H02J 7/00

(54) **BATTERY PACK PROCESSING APPARATUS AND ELECTRONIC DEVICE**

(30) Priority: 30.10.2023 CN 202311412338
(71) Applicant: Gopod Group Holding Limited, Shenzhen, Guangdong 518109 (CN)
(72) Inventor: LIAO, Zhuowen, Shenzhen, Guangdong 518109 (CN); SONG, Xingwang, Shenzhen, Guangdong 518109 (CN)
(74) Representative: Ipside
(86) International application number: PCT/CN2023/133372
(87) International publication number: WO 2025/091587

(57) **Abstract**

This disclosure provides a battery pack processing device and an electronic device, which belong to the field of battery technology. In this device, the first chip of the charge-discharge management circuit is electrically connected to the charge-discharge interface; the 11th pin of the first chip is electrically connected to the 24th pin of the second chip of the logic control circuit; the 12th pin of the first chip is electrically connected to the 23rd pin of the second chip; the positive pole of the battery pack is electrically connected to the 1st pin of the fifth chip, and the negative pole of the battery pack is electrically connected to the 11th pin, CO pin, and 9th pin of the fifth chip through the lithium battery protection circuit; the first signal output end of the battery pack communication circuit is electrically connected to the 13th pin of the second chip; the second signal output end of the battery pack communication circuit is electrically connected to the 14th pin of the second chip; the battery pack communication circuit sends control signals to the second chip; the second chip is used to determine the parallel or series connection of the battery pack based on the control signals. This can achieve parallel or series connection of the battery pack, improving the working efficiency of the battery pack.

## Description

### Cross-Reference to Related Applications

This disclosure claims priority to a Chinese patent application titled "Battery Pack Processing Device and Electronic Device," application number 202311412338.3, filed with the China National Intellectual Property Administration on October 30, 2023, the entire contents of which are incorporated herein by reference.

### Technical Field

This disclosure relates to the field of battery technology, particularly to a battery pack processing device and electronic device.

### Background Art

In battery management systems, it is often necessary to detect and control the state of the battery. Currently, the I2C (Inter-Integrated Circuit) communication protocol is used to exchange data between the battery pack and the main control device. To meet higher voltage and capacity requirements, it is common to stack multiple battery packs. However, there is a problem with low efficiency in the use of battery packs in existing technologies.

### Summary of the Invention

To solve the above technical problems, this disclosure provides a battery pack processing device and electronic device.

In a first aspect, this disclosure provides a battery pack processing device, including:
A charge-discharge management circuit, a logic control circuit, a battery pack protection circuit, and a battery pack communication circuit;
The charge-discharge management circuit includes a first chip and a charge-discharge interface, with the first chip electrically connected to the charge-discharge interface;
The logic control circuit includes a second chip;
The 11th pin of the first chip is electrically connected to the 24th pin of the second chip; the 12th pin of the first chip is electrically connected to the 23rd pin of the second chip;
The battery pack protection circuit includes a fifth chip, a lithium battery protection circuit, and a battery pack shutdown protection circuit. The positive pole of the battery pack is electrically connected to the 1st pin of the fifth chip, and the negative pole of the battery pack is electrically connected to the 11th pin, CO pin, and 9th pin of the fifth chip through the lithium battery protection circuit;
The first signal output end of the battery pack communication circuit is electrically connected to the 13th pin of the second chip; the second signal output end of the battery pack communication circuit is electrically connected to the 14th pin of the second chip;
The battery pack communication circuit is used to send control signals to the second chip through the first signal output end and the second signal output end;
The second chip is used to determine whether the battery pack is connected in parallel or in series based on the control signal.

In some embodiments, the battery pack communication circuit includes a switch module, which includes a twelfth field-effect transistor and a thirteenth field-effect transistor. The source of the twelfth field-effect transistor and the source of the thirteenth field-effect transistor are electrically connected to the 15th pin of the second chip;

The second chip is used to control the conduction or disconnection of the switch module after determining whether the battery pack is connected in parallel or in series.

In some embodiments, the battery pack communication circuit includes a sixth chip, the 8th pin of the sixth chip is electrically connected to the 16th pin of the second chip; the 1st pin of the sixth chip is electrically connected to the 15th pin of the second chip;

The second chip, after determining whether the battery pack is connected in parallel or in series, sends an enable signal to the 1st pin of the sixth chip to activate the sixth chip;

The sixth chip is used to send the output current value read from the sixth chip to the 15th pin of the second chip.

In some embodiments, the charge-discharge interface includes an activation module, which includes a twelfth resistor, a second field-effect transistor, an eleventh resistor, a thirteenth resistor, and a seventeenth capacitor. The first end of the twelfth resistor is used to connect to the power supply, the second end of the twelfth resistor is electrically connected to the base of the second field-effect transistor, the emitter of the second field-effect transistor is grounded, the gate of the second field-effect transistor is electrically connected to the first end of the eleventh resistor and the first end of the thirteenth resistor, the second end of the thirteenth resistor is grounded, the first end of the seventeenth capacitor is electrically connected to the second end of the thirteenth resistor, the second end of the seventeenth capacitor is electrically connected to the connection point of the second end of the eleventh resistor, which is the control end of the activation module, and the control end of the activation module is electrically connected to the output end of the charge-discharge interface.

In some embodiments, the device also includes: a voltage control circuit, which includes a third chip and a fourth chip, the connection point of the 3rd and 5th pins of the fourth chip is electrically connected to the 16th pin of the third chip; the 4th pin of the fourth chip is electrically connected to the 10th pin of the second chip; the 6th pin of the fourth chip is electrically connected to the 11th pin of the second chip;

The fourth chip is used to determine whether a device is plugged into the charge-discharge interface, and if a device is plugged in, it sends the corresponding level to the second chip.

In some embodiments, the fourth chip is also used to determine whether the charge-discharge is in a single-port state or a dual-port state. When in a single-port state, the Type C port or USB port has a fast charging function; when in a dual-port state, the Type C port and USB port have a standard charging function.

In some embodiments, the battery pack shutdown protection circuit includes a seventh field-effect transistor, a sixty-fifth resistor, and a sixty-ninth resistor. The base of the seventh field-effect transistor is electrically connected to the 14th pin of the fifth chip through the sixty-fifth resistor, the emitter of the seventh field-effect transistor and the first end of the sixty-ninth resistor are grounded, the gate of the seventh field-effect transistor and the second end of the sixty-ninth resistor are electrically connected to the 2nd pin of the second chip.

In some embodiments, the device also includes: a Bluetooth power supply module, which includes an amplifier and a Bluetooth module, the input end of the amplifier is used to receive the battery voltage, and the output end of the amplifier is electrically connected to the Bluetooth module;

The Bluetooth power supply module is used for locating the position of the device.

In some embodiments, the device also includes: a lighting and sampling circuit, which includes a seventh chip, the 6th pin of the seventh chip is electrically connected to the 27th pin of the second chip;

The lighting and sampling circuit is used to detect whether there is a load.

In a second aspect, this disclosure provides an electronic device, including the battery pack processing device provided in the first aspect.

The battery pack processing device and electronic device provided in this disclosure, where the charge-discharge management circuit includes a first chip and a charge-discharge interface, with the first chip electrically connected to the charge-discharge interface; the logic control circuit includes a second chip; the 11th pin of the first chip is electrically connected to the 24th pin of the second chip; the 12th pin of the first chip is electrically connected to the 23rd pin of the second chip; the battery pack protection circuit includes a fifth chip, a lithium battery protection circuit, and a battery pack shutdown protection circuit, with the positive pole of the battery pack electrically connected to the 1st pin of the fifth chip, and the negative pole of the battery pack electrically connected to the 11th pin, CO pin, and 9th pin of the fifth chip through the lithium battery protection circuit; the first signal output end of the battery pack communication circuit is electrically connected to the 13th pin of the second chip; the second signal output end of the battery pack communication circuit is electrically connected to the 14th pin of the second chip; the battery pack communication circuit is used to send control signals to the second chip through the first signal output end and the second signal output end; the second chip is used to determine whether the battery pack is connected in parallel or in series based on the control signal. This can realize the series or parallel connection of the battery pack, improving the working efficiency of the battery pack.

### Brief Description of the Drawings

To more clearly illustrate the technical solutions of this disclosure, the following will provide a simple introduction to the drawings used in the embodiments. It should be understood that the following drawings only show some embodiments of this disclosure and therefore should not be considered as limiting the scope of protection of this disclosure. In the various drawings, similar components are denoted by similar numbers.
Figure 1 shows a schematic structure of a battery pack processing device provided by an embodiment of this disclosure;
Figure 2A shows a partial schematic structure of a charge-discharge management circuit provided by an embodiment of this disclosure;
Figure 2B shows another partial schematic structure of a charge-discharge management circuit provided by an embodiment of this disclosure;
Figure 3 shows a schematic structure of a logic control circuit provided by an embodiment of this disclosure;
Figure 4 shows a schematic structure of a battery pack protection circuit provided by an embodiment of this disclosure;
Figure 5 shows a schematic structure of a voltage control circuit provided by an embodiment of this disclosure;
Figure 6 shows a schematic structure of a battery pack communication circuit provided by an embodiment of this disclosure;
Figure 7 shows another schematic structure of a battery pack communication circuit provided by an embodiment of this disclosure;
Figure 8 shows a schematic structure of a Bluetooth power supply circuit provided by an embodiment of this disclosure;
Figure 9 shows a schematic structure of a lighting and sampling circuit provided by an embodiment of this disclosure.
Reference numerals: 1 - battery pack processing device; 10 - charge-discharge management circuit; 101 - charge-discharge interface; 20 - logic control circuit; 30 - battery pack protection circuit; 301 - lithium battery protection circuit; 302 - battery pack shutdown protection circuit; 102 - activation module; 40 - voltage control circuit; 50 - battery pack communication circuit; 60 - Bluetooth power supply module; 70 - lighting and sampling circuit.

### Detailed Description of Embodiments

The following will describe the technical solutions in the embodiments of this disclosure in a clear and complete manner, in conjunction with the drawings in the embodiments of this disclosure. Obviously, the described embodiments are only a part of the embodiments of this disclosure, not all of them. [0049] The components of the embodiments of this disclosure described and shown in the attached drawings can be arranged and designed in a variety of different configurations. Therefore, the detailed description of the embodiments of this disclosure provided in the drawings is not intended to limit the scope of protection of this disclosure, but merely represents selected embodiments of this disclosure. All other embodiments obtained by those skilled in the art without creative efforts fall within the scope of protection of this disclosure.

In the following description, the term "comprising," "having," and their derivatives are intended to indicate the inclusion of certain features, numbers, steps, operations, elements, components, or combinations thereof, and should not be understood as excluding the presence or addition of one or more other features, numbers, steps, operations, elements, components, or combinations thereof.

Furthermore, the terms "first," "second," "third," etc., are used for descriptive purposes only and should not be construed as indicating or implying relative importance.

Unless otherwise specified, all terms used herein (including technical and scientific terms) have the same meaning as commonly understood by one of ordinary skill in the art to which this disclosure belongs. The terms (such as those defined in a general dictionary) should be interpreted as having a meaning that is consistent with their meaning in the context of the relevant art and will not be interpreted as having an idealized or overly formal meaning unless expressly so defined in the embodiments of this disclosure.

### Embodiment 1

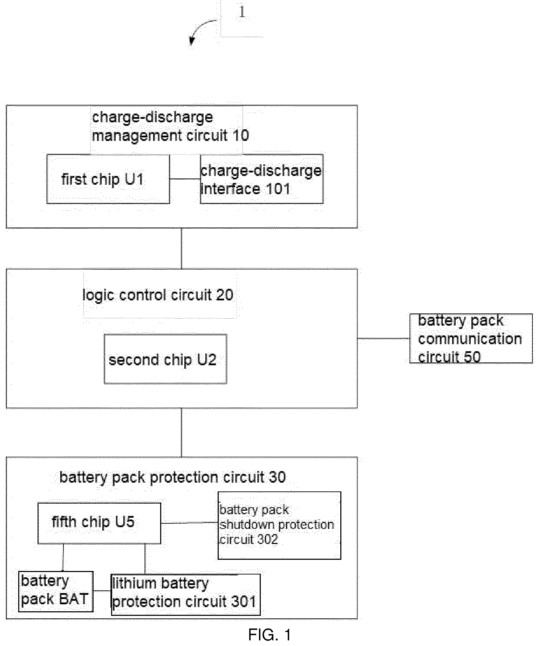

This embodiment of the disclosure provides a battery pack processing device 1. The following will be explained in conjunction with Figures 1 to 9.

Referring to Figures 1 to 9, the battery pack processing device 1 includes: a charge-discharge management circuit 10, a logic control circuit 20, a battery pack protection circuit 30, and a battery pack communication circuit 50.

The charge-discharge management circuit 10 includes a first chip U1 and a charge-discharge interface 101, with the first chip U1 electrically connected to the charge-discharge interface 101.

The logic control circuit 20 includes a second chip U2; the 11th pin of the first chip U1 is electrically connected to the 24th pin of the second chip U2; the 12th pin of the first chip U1 is electrically connected to the 23rd pin of the second chip U2. Wherein, the 11th pin of the first chip U1 is the SDA pin. The 12th pin of the first chip U1 is the SCK pin. The 23rd pin of the second chip U2 is the PT21/AIN9 pin. The 24th pin of the second chip U2 is the PT20/AIN8 pin.

The battery pack protection circuit 30 includes a fifth chip U5, a lithium battery protection circuit 301, and a battery pack shutdown protection circuit 302. The positive pole of the battery pack BAT1 is electrically connected to the 1st pin of the fifth chip U5, and the negative pole of the battery pack BAT1 is electrically connected to the 11th pin, CO pin, and 9th pin of the fifth chip U5 through the lithium battery protection circuit. Wherein, the 1st pin of the fifth chip U5 is the VDD pin, the 11th pin of the fifth chip U5 is the VM pin, the CO pin of the fifth chip U5 is the control voltage end, and the 9th pin of the fifth chip U5 is the DO pin.

The first signal output end of the battery pack communication circuit 50, BAT-SDA, is electrically connected to the 13th pin of the second chip U2; the second signal output end of the battery pack communication circuit 50, BAT-SCL, is electrically connected to the 14th pin of the second chip U2. Wherein, the 13th pin of the second chip U2 is the PT36/AIN6/RX/DMC pin. The 14th pin of the second chip U2 is the PT35/AIN5/TX/DPC pin.

The battery pack communication circuit 50 is used to send control signals to the second chip U2 through the first signal output end and the second signal output end;

The second chip U2 is used to determine whether the battery pack is connected in parallel or in series based on the control signal.

Wherein, the charge-discharge interface 101 includes USB and Type C ports. The Type C port and the first chip U1 form a DC-DC converter for the battery's charge and discharge. The Type C port is a rechargeable and dischargeable interface, which is a standard Type C interface.

The first chip U1 acquires the battery's charge level and voltage, with the 11th and 12th pins of the first chip U1 electrically connected to the 23rd and 24th pins of the second chip U2. Wherein, the 11th and 12th pins of the first chip U1 are the SDA and SCK pins, respectively. The 23rd and 24th pins of the second chip U2 are the PT21/AIN9 and PT20/AIN8 pins, respectively.

The second chip U2 is used to obtain voltage and current from the first chip U1, manage the charge-discharge logic, control the charging and discharging, and determine the charge-discharge power based on the battery's voltage and current obtained by the second chip U2.

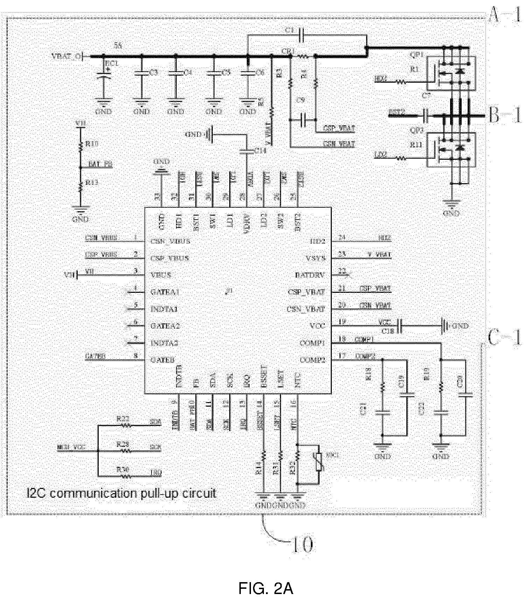

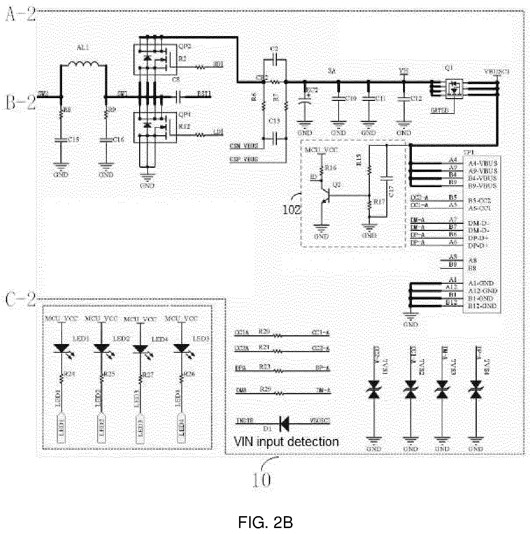

Referring to Figures 2A and 2B, aligning the cut-off point A-1 of Figure 2A with the cut-off point A-2 of Figure 2B, aligning the cut-off point B-1 of Figure 2A with the cut-off point B-2 of Figure 2B, and aligning the cut-off point C-1 of Figure 2A with the cut-off point C-2 of Figure 2B, the overall structure of the charge-discharge management circuit is obtained.

The charge-discharge interface 101 includes an activation module 102, which includes a twelfth resistor R12, a second field-effect transistor Q2, an eleventh resistor R11, a thirteenth resistor R13, and a seventeenth capacitor C17. The first end of the twelfth resistor R12 is used to connect to the power supply MCU-VCC, the second end of the twelfth resistor R12 is electrically connected to the base of the second field-effect transistor Q2, the emitter of the second field-effect transistor Q2 is grounded, the gate of the second field-effect transistor Q2 is electrically connected to the first end of the eleventh resistor R11 and the first end of the thirteenth resistor R13, the second end of the thirteenth resistor R13 is grounded, the first end of the seventeenth capacitor C17 is electrically connected to the second end of the thirteenth resistor R13, the second end of the seventeenth capacitor C17 is electrically connected to the connection point of the second end of the eleventh resistor R11, which is the control end of the activation module 102, and the control end of the activation module 102 is electrically connected to the output end of the charge-discharge interface 101.

In this embodiment, for devices with non-standard Type C interfaces that only have vbus and gnd, the second chip U2 is activated through the activation module 102 to recognize the insertion of non-standard devices. In the overall charge-discharge management circuit formed by Figures 2A and 2B, QP1, QP2, QP3, and QP4 are power transistors that form the boost and buck states. In Figure 2A, VBAT_O represents the battery voltage. When the battery voltage VBAT-O enters the charge-discharge management circuit 10, for example, at 9V, 15V, 20V, QP1 and QP4 power transistors conduct, are in a buck state, QP1 passes through a 15uH inductor from SW2, enters QP4 through SW1, forming a buck state, and reaches the Type C port from QP2, forming a buck state. LD1/HD1 provides the drive voltage from the first chip U1, which is high or low level, conducting at high level, not conducting at low level. In Figure 2B, LED1-LED4 are battery level indicator lights, for example, indicating 25%, 50%, 75%, 100% by the number of lights on. TVS1-TVS4 form a surge protection circuit to prevent ESD surges.

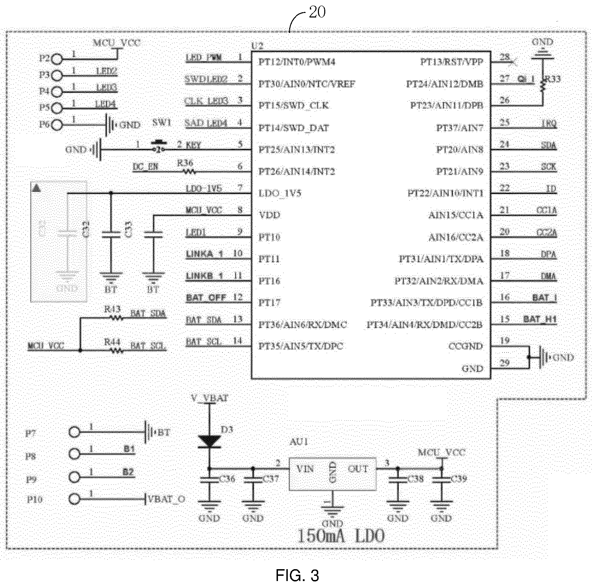

Referring to Figure 3, the logic control circuit 20 includes the second chip U2 and a first amplifier AU1. The second chip U2 is also connected to other chips. The 2nd pin of the first amplifier AU1 is connected to the V-VBAT end through the third diode D3, the 3rd pin of the first amplifier AU1 is connected to the MCU_VCC end, realizing MCU logic control. Wherein, the 1st pin of the first amplifier AU1 is the GND pin, the 2nd pin of the first amplifier AU1 is the VIN pin, and the 3rd pin of the first amplifier AU1 is the OUT pin.

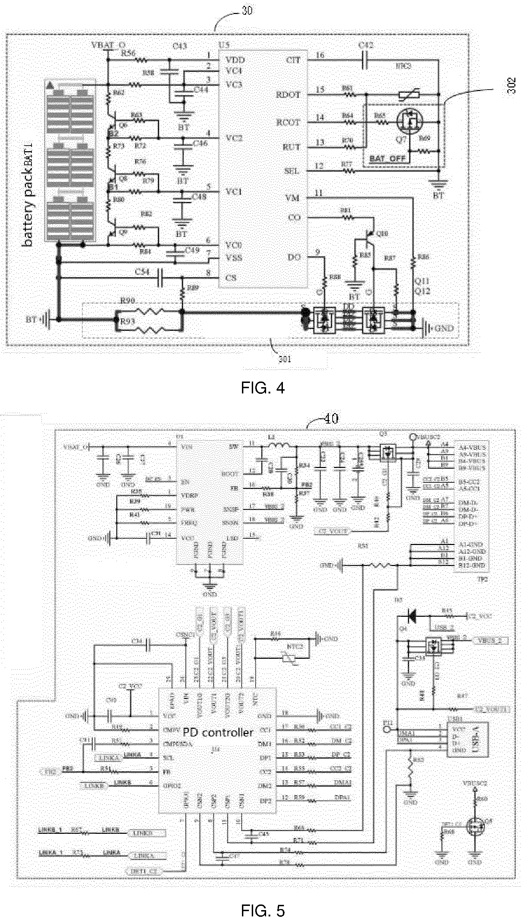

Referring to Figure 4, the battery pack protection circuit 30 includes a lithium battery protection circuit 301 and a battery pack shutdown protection circuit 302. The battery pack shutdown protection circuit 302 includes a seventh field-effect transistor Q7, a sixty-fifth resistor R65, and a sixty-ninth resistor R69. The base of the seventh field-effect transistor Q7 is electrically connected to the 14th pin of the fifth chip U5 through the sixty-fifth resistor R65, the emitter of the seventh field-effect transistor Q7 and the first end of the sixty-ninth resistor R69 are grounded, the gate of the seventh field-effect transistor Q7 and the second end of the sixty-ninth resistor R69 are electrically connected to the 2nd pin of the second chip. Wherein, the 14th pin of the fifth chip U5 is the RCOT pin. The 2nd pin of the second chip is the PT30/AIN0/NTC/VREF pin.

The battery pack protection circuit 30 provides protection for the battery, for example, in terms of overvoltage and overcharging.

The fifth chip U5 controls the voltage output of the Type C and USB ports, specifically, based on the communication protocol to control the voltage, controlling the single-port state (Type C or USB port) or dual-port state (Type C and USB ports).

Referring to Figure 5, the voltage control circuit 40 includes a third chip U3 and a fourth chip U4, the connection point of the 3rd and 5th pins of the fourth chip U4 is electrically connected to the 16th pin of the third chip U3; the 4th pin (LINKA1 signal) of the fourth chip U4 is electrically connected to the 10th pin (LINKA_1 signal) of the second chip U2; the 6th pin (LINKB signal) of the fourth chip U4 is electrically connected to the 11th pin (LINKB_1 signal) of the second chip U2. Wherein, the 11th pin of the second chip U2 is the PT16 pin. The 16th pin of the third chip U3 is the FB pin. The 3rd and 5th pins of the fourth chip U4 are the CMPI/SDA and FB pins, respectively. The 4th pin of the fourth chip U4 is the SCL pin.

The fourth chip U4 is used to determine whether a device is plugged into the charge-discharge interface 101, and if a device is plugged in, it sends the corresponding level to the second chip U2.

In some embodiments, the fourth chip U4 is also used to determine whether the charge-discharge is in a single-port state or a dual-port state. When in a single-port state, the Type C port or USB port has a fast charging function; when in a dual-port state, the Type C port and USB port have a standard charging function.

In this embodiment, the Type C port charges the device end or the battery pack, with a rechargeable and dischargeable interface.

The third chip U3 is a buck IC, responsible for outputting electrical energy to the Type C and USB ports, the Type C port outputs electrical energy to mobile phones or tablets, charging externally, and after reducing the battery voltage, outputs externally.

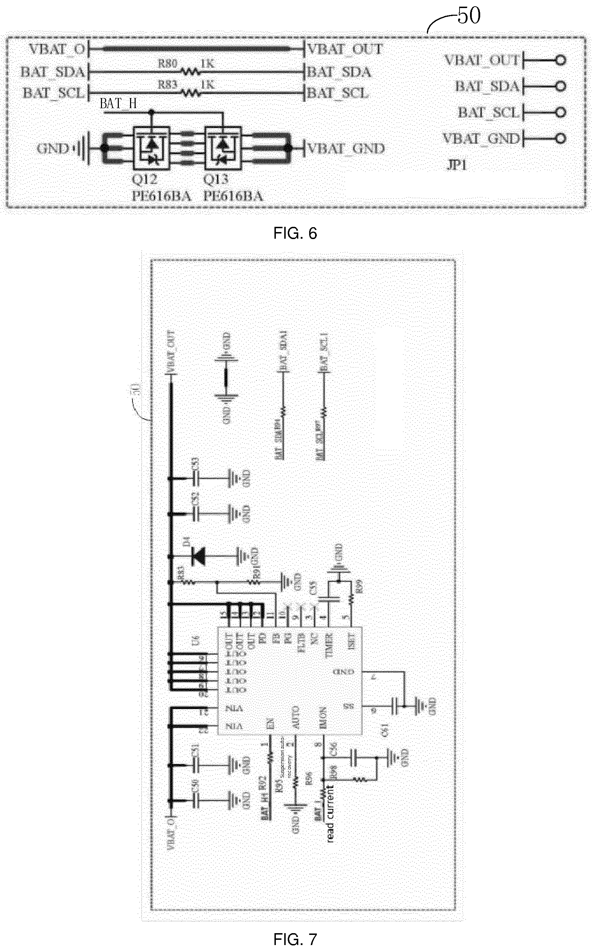

Referring to Figure 6, the battery pack communication circuit 50 includes a switch module, which includes a twelfth field-effect transistor Q12 and a thirteenth field-effect transistor Q13, the source of the twelfth field-effect transistor Q12 and the source of the thirteenth field-effect transistor Q13 are electrically connected to the 15th pin of the second chip U2. Wherein, the 15th pin of the second chip U2 is the PT34/AIN4/RX/DMD/CC2B pin.

The second chip U2 is used to control the conduction or disconnection of the switch module after determining whether the battery pack is connected in parallel or in series.

As shown in Figure 6, there are four signal ends VBAT_OUT, BAT-SDA, BAT-SCL, VBAT_GND, based on the information from the BAT-SDA and BAT-SCL signal ends to determine whether the battery pack is connected in parallel or in series, for example, the overall charge-discharge management circuit formed by Figures 2A and 2B, combined with Figures 3 to 6 as a whole circuit; the overall charge-discharge management circuit formed by Figures 2A and 2B, combined with Figures 3 to 5, Figures 7 to 9 as a whole circuit; through the VBAT_OUT, BAT-SDA, BAT-SCL, VBAT_GND signal ends, the input signals from the BAT-SDA and BAT-SCL signal ends determine whether the battery pack is connected in parallel or in series. For example, if the battery is 30,000 mAh, if two are connected in parallel, there will be 60,000 mAh.

In Figure 6, when the device is normally inserted into the four signal ends VBAT_OUT, BAT-SDA, BAT-SCL, VBAT_GND, the battery pack is connected in parallel, when the device is inserted in reverse into the four signal ends VBAT_OUT, BAT-SDA, BAT-SCL, VBAT_GND, the battery pack is connected in series. For example, the SDA and SCL signals are 01 for parallel connection, the SDA and SCL signals are 01 for series connection, and the SDA and SCL signals are given to the second chip U2. When the second chip U2 does not recognize the SDA and SCL signals, the switch module including the twelfth field-effect transistor Q12 and the thirteenth field-effect transistor Q13 is not conducting. When the SDA and SCL signals are recognized, the twelfth field-effect transistor Q12 and the thirteenth field-effect transistor Q13 are conducted, controlled by the 15th pin (PT34/AIN4/RX/DMD/CC2B pin) of the second chip U2. The SDA and SCL signals are default to 00, in the default state, the twelfth field-effect transistor Q12 and the thirteenth field-effect transistor Q13 are not conducting. When the device is determined to be connected correctly, the battery pack is connected in parallel, when the device is determined to be connected in reverse, the battery pack is connected in series. When the battery pack is determined to be connected in series or parallel, the second chip U2 normally outputs current and voltage, and the twelfth field-effect transistor Q12 and the thirteenth field-effect transistor Q13 of the switch module are conducting.

For example, if the Type C port can only discharge for 3 hours, then after parallel connection, it can discharge for 6 hours, and the capacity becomes larger. If the voltage of the Type C port is only 10-20V, and the battery voltage is 9-12.6V, then after series connection, the battery voltage is 23.2V, the battery voltage increases, driving more devices. Furthermore, after determining series or parallel connection, when charging the battery pack, it is possible to control charging the battery with the lower voltage first, the second chip U2 can determine the master and slave based on the charge level or according to the usage state, and then the master's second chip U2 controls it.

Referring to Figure 7, the battery pack communication circuit 50 includes a sixth chip U6, the 8th pin of the sixth chip U6 is electrically connected to the 16th pin of the second chip U2; the 1st pin of the sixth chip U6 is electrically connected to the 15th pin of the second chip U2, the second chip U2, after determining whether the battery pack is connected in parallel or in series, sends an enable signal to the 1st pin of the sixth chip U6 to activate the sixth chip U6; the sixth chip U6 is used to send the output current value read from the sixth chip U6 to the 15th pin of the second chip U2. Wherein, the 8th pin of the sixth chip U6 is the IMON pin, the 16th pin of the second chip U2 is the PT33/AIN3/TX/DPD/CC1B pin. The 1st pin of the sixth chip U6 is the EN pin (enable end), the 15th pin of the second chip U2 is the PT34/AIN4/RX/DMD/CC2B pin.

In Figure 7, the 1st pin of the sixth chip U6 is the enable end (BAT-H1 signal), activating the sixth chip U6 to start, the 8th pin of the sixth chip U6 (IMON pin) reads its own output current value BAT_I. In Figure 7, there are BAT_SDA and BAT_SCL signal ends, the second chip U2 determines whether the battery pack is connected in parallel or in series based on the BAT_SDA and BAT_SCL signal ends, after the BAT_SDA and BAT_SCL signal ends communicate with the second chip U2, the second chip U2 sends the BAT_H1 signal to the sixth chip U6, controlling the activation of the sixth chip U6.

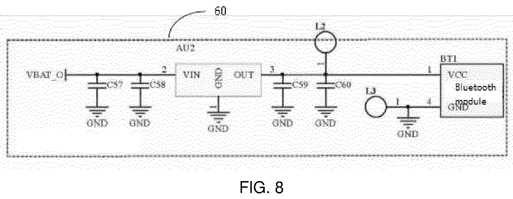

Referring to Figure 8, the Bluetooth power supply module 60 includes an amplifier AU2 and a Bluetooth module BT1, the input end of the amplifier AU2 is used to receive the battery voltage VBAT_O, and the output end of the amplifier AU2 is electrically connected to the Bluetooth module BT1. Wherein, the 1st pin of the amplifier AU2 is the GND pin, the 2nd pin of the amplifier AU2 is the input end (VIN pin), and the 3rd pin of the amplifier AU2 is the output end (OUT pin).

The Bluetooth power supply module 60 is used for locating the position of the device. The device can be a mobile phone, tablet, or other devices waiting to be charged.

In this embodiment, the Bluetooth power supply module 60 can sense Bluetooth devices within a certain range and locate related devices.

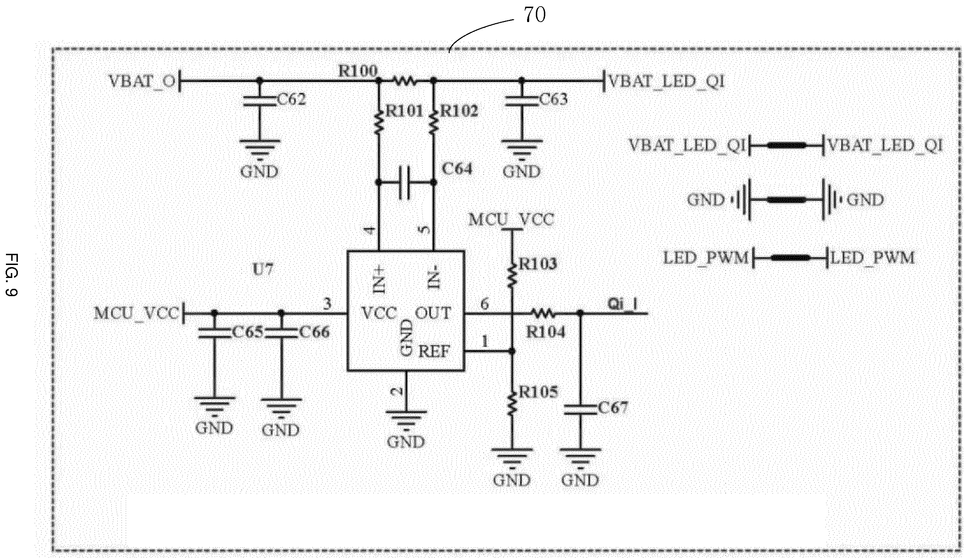

Referring to Figure 9, as shown in Figure 9, the lighting and sampling circuit 70 includes a seventh chip U7, where pin 6 of the seventh chip U7 is electrically connected to pin 27 of the second chip U2. Here, pin 6 of the seventh chip U7 is the OUT pin, and pin 27 of the second chip U2 is the PT24/AIN12/DMB pin.

The lighting and sampling circuit 70 is used to detect the presence of a load.

In this embodiment, the lighting and sampling circuit 70 can be used as a flashlight for illumination. The electrical connection between pin 6 (OUT pin) of the seventh chip U7 and pin 27 (PT24/AIN12/DMB pin) of the second chip U2 allows for the detection of current Qi-I at pin 6 of the seventh chip U7 to determine the presence of a load. Based on the presence of a load, it is determined whether the indicator light needs to be illuminated.

In this embodiment, the first chip U1, the second chip U2, the third chip U3, the fourth chip U4, the fifth chip U5, the sixth chip U6, and the seventh chip U7 are chips with corresponding pins that can perform corresponding functions.

The battery pack processing device 1 provided in the above disclosure includes a charge-discharge management circuit 10 comprising a first chip and a charge-discharge interface 101, where the first chip is electrically connected to the charge-discharge interface 101; a logic control circuit 20 includes a second chip; pin 11 of the first chip is electrically connected to pin 24 of the second chip; pin 12 of the first chip is electrically connected to pin 23 of the second chip; a battery pack protection circuit 30 includes a fifth chip, a lithium battery protection circuit 301, and a battery pack shutdown protection circuit 302, where the positive pole of the battery pack is electrically connected to pin 1 of the fifth chip, and the negative pole of the battery pack is electrically connected through the lithium battery protection circuit to pin 11, the CO pin, and pin 9 of the fifth chip; the first signal output end of the battery pack communication circuit 50 is electrically connected to pin 13 of the second chip; the second signal output end of the battery pack communication circuit 50 is electrically connected to pin 13 of the second chip; the battery pack communication circuit 50 is used to send control signals to the second chip through the first and second signal output ends; the second chip is used to determine whether the battery pack is connected in parallel or in series based on the control signal. This can achieve the parallel or series connection of the battery pack, improving the working efficiency of the battery pack.

### Embodiment 2

Furthermore, the present disclosure provides an electronic device that includes the battery pack processing device provided in Embodiment 1.

It should be noted that the electronic device provided in this embodiment includes the battery pack processing device 1 provided in Embodiment 1, which can achieve the processing process of the battery pack processing device 1 of Embodiment 1 and can reach the corresponding effects of the battery pack processing device 1 of Embodiment 1. To avoid repetition, it is not elaborated here.

The embodiments of the present disclosure have been described in conjunction with the accompanying drawings above, but the present disclosure is not limited to the above-described specific embodiments. The specific embodiments are merely illustrative and not restrictive. Those skilled in the art can make many forms without departing from the spirit and scope of the present disclosure as revealed and protected by the aims and claims, all of which fall within the protection of the present disclosure.

### Industrial Applicability

The present disclosure provides a battery pack processing device and an electronic device, which belong to the field of battery technology. In this device, the first chip of the charge-discharge management circuit is electrically connected to the charge-discharge interface; pin 11 of the first chip is electrically connected to pin 24 of the second chip of the logic control circuit; pin 12 of the first chip is electrically connected to pin 23 of the second chip; the positive pole of the battery pack is electrically connected to pin 1 of the fifth chip, and the negative pole of the battery pack is electrically connected through the lithium battery protection circuit to pin 11, the CO pin, and pin 9 of the fifth chip; the first signal output end of the battery pack communication circuit is electrically connected to pin 13 of the second chip; the second signal output end of the battery pack communication circuit is electrically connected to pin 14 of the second chip; the battery pack communication circuit sends control signals to the second chip; the second chip is used to determine whether the battery pack is connected in parallel or in series based on the control signal. This can achieve the parallel or series connection of the battery pack, improving the working efficiency of the battery pack.

Moreover, it is understandable that the battery pack processing device and electronic device of the present disclosure are reproducible and can be used in various industrial applications. For example, the battery pack processing device and electronic device of the present disclosure can be applied in the field of battery technology.

## Claims

1. A battery pack processing device, **characterized in that** it comprises: a charge-discharge management circuit, a logic control circuit, a battery pack protection circuit, and a battery pack communication circuit;
the charge-discharge management circuit includes a first chip and a charge-discharge interface, with the first chip electrically connected to the charge-discharge interface;
the logic control circuit includes a second chip;
the 11th pin of the first chip is electrically connected to the 24th pin of the second chip; the 12th pin of the first chip is electrically connected to the 23rd pin of the second chip;
the battery pack protection circuit includes a fifth chip, a lithium battery protection circuit, and a battery pack shutdown protection circuit, with the positive pole of the battery pack electrically connected to the 1st pin of the fifth chip, and the negative pole of the battery pack electrically connected to the 11th pin, CO pin, and 9th pin of the fifth chip through the lithium battery protection circuit;
the first signal output end of the battery pack communication circuit is electrically connected to the 13th pin of the second chip; the second signal output end of the battery pack communication circuit is electrically connected to the 14th pin of the second chip;
the battery pack communication circuit is used to send control signals to the second chip through the first and second signal output ends;
the second chip is used to determine whether the battery pack is connected in parallel or in series based on the control signals.

2. The battery pack processing device according to claim 1, **characterized in that** the battery pack communication circuit includes a switch module, which includes a twelfth field-effect transistor and a thirteenth field-effect transistor, with the source of the twelfth field-effect transistor and the source of the thirteenth field-effect transistor electrically connected to the 15th pin of the second chip;
the second chip is used to control the conduction or disconnection of the switch module after determining the parallel or series connection of the battery pack.

3. The battery pack processing device according to claim 1, **characterized in that** the battery pack communication circuit includes a sixth chip, with the 8th pin of the sixth chip electrically connected to the 16th pin of the second chip; the 1st pin of the sixth chip is electrically connected to the 15th pin of the second chip;
the second chip is used to send an enable signal to the 1st pin of the sixth chip to activate the sixth chip after determining the parallel or series connection of the battery pack;
the sixth chip is used to send the output current value read by the sixth chip to the 15th pin of the second chip.

4. The battery pack processing device according to claim 1, **characterized in that** the charge-discharge interface includes an activation module, which includes a twelfth resistor, a second field-effect transistor, an eleventh resistor, a thirteenth resistor, and a seventeenth capacitor. The first end of the twelfth resistor is used to connect to the power supply, the second end of the twelfth resistor is electrically connected to the base of the second field-effect transistor, the emitter of the second field-effect transistor is grounded, the gate of the second field-effect transistor is electrically connected to the first end of the eleventh resistor and the first end of the thirteenth resistor, the second end of the thirteenth resistor is grounded, the first end of the seventeenth capacitor is electrically connected to the second end of the thirteenth resistor, and the second end of the seventeenth capacitor is electrically connected to the connection point of the second end of the eleventh resistor, which is the control end of the activation module, and the control end of the activation module is electrically connected to the output end of the charge-discharge interface.

5. The battery pack processing device according to claim 4, **characterized in that** it further comprises: a voltage control circuit, which includes a third chip and a fourth chip, with the connection point of the 3rd and 5th pins of the fourth chip electrically connected to the 16th pin of the third chip; the 4th pin of the fourth chip is electrically connected to the 10th pin of the second chip; the 6th pin of the fourth chip is electrically connected to the 11th pin of the second chip;
the fourth chip is used to determine whether a device is plugged into the charge-discharge interface and, if a device is inserted, to send the corresponding level to the second chip.

6. The battery pack processing device according to claim 5, **characterized in that** the fourth chip is also used to determine whether the charge-discharge is in a single-port state or a dual-port state, when in a single-port state, the Type-C port or USB port has a fast charging function; when in a dual-port state, the Type-C port and USB port have a standard charging function.

7. The battery pack processing device according to claim 1, **characterized in that** the battery pack shutdown protection circuit includes a seventh field-effect transistor, a sixty-fifth resistor, and a sixty-ninth resistor, with the base of the seventh field-effect transistor electrically connected to the 14th pin of the fifth chip through the sixty-fifth resistor, the emitter of the seventh field-effect transistor and the first end of the sixty-ninth resistor are grounded, and the gate of the seventh field-effect transistor and the second end of the sixty-ninth resistor are electrically connected to the 2nd pin of the second chip.

8. The battery pack processing device according to claim 1, **characterized in that** it further comprises:
a Bluetooth power supply module, which includes an amplifier and a Bluetooth module, with the input end of the amplifier used to receive battery voltage, and the output end of the amplifier electrically connected to the Bluetooth module;
the Bluetooth power supply module is used for locating device position.

9. The battery pack processing device according to claim 8, **characterized in that** it further comprises:
a lighting and sampling circuit, which includes a seventh chip, with the 6th pin of the seventh chip electrically connected to the 27th pin of the second chip;
the lighting and sampling circuit is used for detecting whether there is a load.

10. An electronic device, **characterized in that** it comprises the battery pack processing device according to any one of claims 1 to 9.
